# EUROPÄISCHE PATENTANMELDUNG

(11) **EP 4 834 853 A1**
(43) Veröffentlichungstag der Anmeldung: **04.11.2026**
(21) Anmeldenummer: 25173568.4
(22) Anmeldetag: 30.04.2025
(51) Int. Cl.: C02F 1/78, C02F 1/467

(54) **VERFAHREN, VORRICHTUNG UND SYSTEM ZUR REINIGUNG EINER FLÜSSIGKEIT MIT REINIGUNGSGAS**

(71) Anmelder: HEMA Maschinen- und Apparateschutz GmbH, 63500 Seligenstadt (DE)
(72) Erfinder: Najorka, Lars, 63225 Langen (DE); Ricker, Marlene, 63110 Rodgau (DE); Otto, Sebastian, 55411 Bingen am Rhein (DE); Koehler, Stephan, 78467 Konstanz (DE)
(74) Vertreter: Herrmann, Daniel

(57) **Zusammenfassung**

Beschrieben wird ein Verfahren zur zumindest teilweisen Reinigung einer Flüssigkeit (5), insbesondere einer wasserhaltigen Flüssigkeit (5), mit Reinigungsgas (6), insbesondere mit ozonhaltigem Gas, das Verfahren umfassend: Erfassen eines ersten Volumenstroms der zur reinigenden Flüssigkeit (5) mit einem ersten Sensor (3); Einstellen mindestens eines sich auf eine Abgabemenge des Reinigungsgases (6), auswirkenden Verfahrensparameters in Abhängigkeit des erfassten ersten Volumenstroms, so dass eine Ozonerste Abgabemenge des Reinigungsgases (6), an die den erfassten ersten Volumenstrom aufweisende zu reinigende Flüssigkeit (5) abgegeben wird, um die zu reinigende Flüssigkeit (5) zumindest teilweise zu reinigen, wobei das Einstellen des mindestens einen Verfahrensparameters in Abhängigkeit des erfassten ersten Volumenstroms in einem ersten Betriebsmodus nach einem ersten, in einer Steuer- und/oder Regelungseinheit (2) hinterlegten Zusammenhang erfolgt, der angibt, dass bei einem größeren erfassten Volumenstrom ein Wert für den mindestens einen Verfahrensparameter eingestellt wird, der einen größeren Wert für die erste Abgabemenge des Reinigungsgases (6) an die zu reinigende Flüssigkeit (5) bewirkt, als bei einem kleineren erfassten Volumenstrom. Beschrieben werden auch eine entsprechend Vorrichtungen und ein System.

## Beschreibung

### TECHNISCHES GEBIET

Die Erfindung betrifft ein Verfahren, eine Vorrichtung und ein System zur Reinigung einer Flüssigkeit mit Reinigungsgas.

### HINTERGRUND

Insbesondere in lebensmittelverarbeitenden Betrieben, wie auch bei der Herstellung von Eis, in Geschirrspülsystemen, Waschmaschinen und in medizinischen Einrichtungen und Laboren ist die Gewährleistung von keimfreien oder zumindest keimarmen Bedingungen geboten. So ist in diesen Bereichen die Desinfektion der Räumlichkeiten, Oberflächen, Geräte und der verwendeten Flüssigkeiten von zentraler Bedeutung.

Zur Desinfektion dieser verwendeten Flüssigkeiten, sei es als Reinigungs- oder auf der Flüssigkeit basierender Produkte als Konsummittel, werden neben UV-Strahlung und Filtration mitunter Reinigungsgase eingesetzt, insbesondere etwa Ozon oder Chlor. Dieses Desinfektionskonzept stellt einen signifikant energieärmeren Ansatz dar als das klassische Abkochen von Wasser.

Es ist bekannt, dass Ozon flüchtiger, effektiver und (gewollt) kurzlebiger ist als das Depot-Desinfektionsmittel Chlor. Weiterhin ist bekannt, dass Gaszellen, wie etwa Elektrolysezellen zur Erzeugung von Ozon, in eine Wasserleitung integriert werden können, um aus einströmenden Wasser Reinigungsgas herzustellen, welches sich unmittelbar in der Flüssigkeit, wie beispielsweise Wasser, löst. Diese gasangereicherte Flüssigkeit wird dadurch gereinigt und kann dann sowohl als Desinfektionsmittel in lebensmittelverarbeitenden Betrieben, als auch - mit einer entsprechenden Verfahrensweise - zur Herstellung von Lebensmitteln verwendet werden.

EP 3 388 552 B1 sieht vor, eine Elektrolysezelle zur Erzeugung von Ozon in eine Wasserleitung zu integrieren. Darin wird die Elektrolysezelle nur dann in vorgegebener, fixer Stärke aktiviert, wenn eine Erhöhung des Wasserdurchflusses eine Änderung einer Potentialdifferenz erzeugt, die ein Signal zum Einschalten der Elektrolysezelle durch die Steuereinheit auslöst. Eine Senkung des Wasserdurchflusses erzeugt eine Änderung der Potentialdifferenz, die ein Signal zum Ausschalten der Elektrolysezelle durch die Steuereinheit auslöst. Die Elektrolysezelle ist somit entweder inaktiv oder erzeugt eine voreingestellte Ozonmenge.

### KURZFASSUNG

Die Erfinder haben erkannt, dass durch den oben beschriebenen binären Ansatz aus dem Stand der Technik zwar sichergestellt, dass eine Gaszelle nur dann Reinigungsgas erzeugt, wenn ein Fluss der zu reinigenden Flüssigkeit stattfindet, jedoch der binäre Ansatz folgende Probleme aufwirft.

Es kann zum Einen mitunter deutlich mehr Reinigungsgas in der Gaszelle erzeugt werden, als nötig wäre, um die erforderliche Reinigung der gegebenen Flüssigkeit zu erzielen. Neben der Umweltbelastung und Verschwendung von Gas-Ressourcen setzt dies auch die verbleibende Lebensdauer der Gaszelle herab, was auch Ressourcen verschwendet. Auch kann es durch einen zu hohen Einsatz von Reinigungsgas in der Flüssigkeit zu Geruchsbelästigungen kommen. Gesundheitliche Risiken können so für einen Nutzer der Gaszelle entstehen. Zum Anderen kann mitunter zu wenig Reinigungsgas in der Gaszelle erzeugt werden, als nötig wäre, um die erforderliche Reinigung der gegebenen Flüssigkeit zu erzielen. Dies birgt die Gefahr, dass die gewünschte Reinheit sowohl in der Flüssigkeit, als auf für die Anwendung der Flüssigkeit, nicht gegeben ist und dadurch ebenfalls gesundheitliche Risiken für Nutzer entstehen.

Der Erfindung liegt daher die Aufgabe zugrunde, Mittel bereitzustellen, die eine verlässlichere Reinigung einer Flüssigkeit mit Reinigungsgas bei gleichzeitiger Schonung von Ressourcen ermöglicht.

Gelöst wird diese Aufgabe durch ein Verfahren zur zumindest teilweisen Reinigung einer Flüssigkeit mit Reinigungsgas nach Anspruch 1. Das Verfahren umfasst: Erfassen eines ersten Volumenstroms der zur reinigenden Flüssigkeit mit einem Sensor; Einstellen mindestens eines sich auf eine Abgabemenge des Reinigungsgases auswirkenden Verfahrensparameters in Abhängigkeit des erfassten ersten Volumenstroms, so dass eine erste Abgabemenge des Reinigungsgases an die den erfassten ersten Volumenstrom aufweisende zu reinigende Flüssigkeit abgegeben wird, um die zu reinigende Flüssigkeit zumindest teilweise zu reinigen, wobei das Einstellen des mindestens einen Verfahrensparameters in Abhängigkeit des erfassten ersten Volumenstroms in einem ersten Betriebsmodus nach einem ersten, in einer Steuer- und/oder Regelungseinheit hinterlegten Zusammenhang (z.B. eine ausführbare Logik, wie ein Computer-Programm) erfolgt, der angibt, dass bei einem größeren erfassten Volumenstrom ein Wert für den mindestens einen Verfahrensparameter eingestellt wird, der einen größeren Wert für die erste Abgabemenge des Reinigungsgases an die zu reinigende Flüssigkeit bewirkt, als bei einem kleineren erfassten Volumenstrom. Mit anderen Worten gibt der erste Zusammenhang an, dass bei einem kleineren erfassten Volumenstrom ein Wert für den mindestens einen Verfahrensparameter eingestellt wird, der einen kleineren Wert für die erste Abgabemenge des Reinigungsgases an die zu reinigende Flüssigkeit bewirkt, als bei einem größeren erfassten Volumenstrom.

Dadurch, dass ein erster Volumenstrom der zur reinigenden Flüssigkeit mit einem Sensor erfasst wird, wird der tatsächliche Volumenstrom der zu reinigen Flüssigkeit bestimmt. Eine Abgabemenge des Reinigungsgases wird an die den erfassten Volumenstrom aufweisende zu reinigende Flüssigkeit abgegeben, um die zu reinigende Flüssigkeit zumindest teilweise zu reinigen. Es wird also der Fall des Reinigens der Flüssigkeit mit einer an diese abgegebenen Menge an Reinigungsgas betrachtet. Für die Abgabemenge des Reinigungsgases zum Zwecke der Reinigung der Flüssigkeit wird die Einstellung mindestens eines sich auf die Abgabemenge des Reinigungsgases auswirkenden Verfahrensparameters in Abhängigkeit des erfassten Volumenstroms vorgenommen, wodurch der Volumenstrom nunmehr bei der Reinigung der Flüssigkeit berücksichtigt wird. Dadurch kann die Reinigung besser auf den tatsächlichen Reinigungsbedarf angepasst werden.

Dadurch, dass nun das Einstellen des mindestens einen Verfahrensparameters in Abhängigkeit des erfassten Volumenstroms in einem ersten Betriebsmodus nach einem ersten, in einer Steuer- und/oder Regelungseinheit hinterlegten Zusammenhang erfolgt, der angibt, dass bei einem größeren erfassten Volumenstrom ein Wert für den mindestens einen Verfahrensparameter eingestellt wird, der einen größeren Wert für die erste Abgabemenge des Reinigungsgases an die zu reinigende Flüssigkeit bewirkt, als bei einem kleineren erfassten Volumenstrom, wird sichergestellt, dass im Falle der Reinigung der Flüssigkeit bei größeren Volumenströmen eine größere Menge an Reinigungsgas abgegeben wird, als bei kleineren Volumenströmen. Dies ermöglicht eine verlässlichere Reinigung von Flüssigkeiten mit Reinigungsgas, ohne unnötig Ressourcen zu verschwenden und dadurch auch Belastungen für Mensch, Umwelt und Apparaturen zu reduzieren. Auch können die die Flüssigkeit leitenden Leitungssysteme verlässlicher gereinigt werden, da die mit dem Reinigungsgas beaufschlagte Flüssigkeit darin gelöstes Reinigungsgas aufweisen kann.

Einerseits wird so ermöglicht, zu vermeiden, dass für konkret vorliegende höhere Volumenströme an Flüssigkeit zu wenig Reinigungsgas erzeugt wird. Andererseits wird so ermöglicht, zu vermeiden, dass für konkret vorliegende geringere Volumenströme an Flüssigkeit zu viel Reinigungsgas produziert wird. Dadurch kann im Wesentlichen so viel Reinigungsgas erzeugt werden, wie für eine Reinigung benötigt wird. Dies schont die Apparatur zur Erzeugung des Reinigungsgases, die Leitungen der Flüssigkeit, die verwendeten Gas-Ressourcen, sowie Mensch und Umwelt.

Bevorzugt wird im Rahmen dieser Offenbarung ein bestimmtes Volumen einer zu reinigenden Flüssigkeit als gereinigt angesehen, wenn in dem Volumen im Durchschnitt 100 koloniebildende Einheiten (KBE) oder weniger pro Milliliter (ml) Flüssigkeit vorliegen (insbesondere bei Raumtemperatur; vgl. Trinkwasserverordnung). Bevorzugt werden im Durchschnitt max. 10 koloniebildende Einheiten (KBE) pro Milliliter (ml) Flüssigkeit erreicht. Bevorzugt wird in Mikrogramm Reinigungsgas (z.B. Ozon) pro Liter Flüssigkeit (z.B. Wasser) weniger als 100, bevorzugt 10-50, besonders bevorzugt 20-30, abgegeben, um solche Reinigungen zu erzielen. Der Volumenstrom kann unter 30 Liter pro Minute sein, bevorzugt 0,1-20 L/min., weiter bevorzugt 0,2-10 L/min., oder besonders bevorzugt 0,01-2 L/min.

Der mindestens eine Verfahrensparameter kann eine elektrische Größe, insbesondere eine elektrische Leistung, umfassen mit der eine Gaszelle, insbesondere eine Elektrolysezelle, zur Erzeugung des Reinigungsgases, insbesondere ozonhaltiges Gas, betrieben wird.

In dieser Offenbarung kann, im Falle einer elektrischen Leistung der Gaszelle zur Erzeugung des Reinigungsgases als Verfahrensparameter, der Verfahrensparameter im Wertebereich 5 bis 900 mW, bevorzugt 50 bis 600 mW liegen.

Gemäß eines bevorzugten Aspekt gibt der erste vorbestimmte Zusammenhang an nun, dass der mindestens eine Verfahrensparameter derart eingestellt wird, dass mit ansteigendem erfassten Volumenstrom, die Abgabemenge des Reinigungsgases an die zu reinigende Flüssigkeit monoton oder streng monoton ansteigt. Dadurch kann noch genauer so viel Reinigungsgas erzeugt werden, wie für eine Reinigung benötigt wird. Die damit einhergehenden oben genannten Effekte werden dadurch noch stärker bewirkt.

Nach einem bevorzugten Aspekt umfasst das Verfahren ferner: Erfassen mindestens einer weiteren, vorzugsweise einen Reinigungsbedarf der Flüssigkeit betreffenden, Eigenschaft der zur reinigenden Flüssigkeit; wobei das Einstellen des mindestens einen Verfahrensparameters in Abhängigkeit des erfassten Volumenstroms ferner in Abhängigkeit der erfassten weiteren Eigenschaft der zu reinigenden Flüssigkeit erfolgt, vorzugsweise derart, dass bei einer einen höheren Reinigungsbedarf für die Flüssigkeit angebenden erfassten Eigenschaft, der mindestens eine Verfahrensparameter derart eingestellt wird, dass dadurch eine höhere Abgabemenge des Reinigungsgases bewirkt wird und/oder, dass bei einer einen geringeren Reinigungsbedarf für die Flüssigkeit angebenden erfassten Eigenschaft, der mindestens eine Verfahrensparameter derart eingestellt wird, dass dadurch eine geringere Abgabemenge des Reinigungsgases bewirkt wird. Die weitere Eigenschaft kann beispielhaft eine Konzentration von Erdalkaliionen (z.B. Wasserhärte), einen Verunreinigungsgrad, eine elektrische Leitfähigkeit, eine Temperatur und/oder ein Druck der zu reinigenden Flüssigkeit umfassen. Durch die Berücksichtigung von weiteren Eigenschaften der Flüssigkeit, insbesondere die den Reinigungsbedarf der Flüssigkeit betreffen, bei der Einstellung des mindestens einen die Abgabemenge des Reinigungsgases beeinflussenden Verfahrensparameter, kann die Abgabemenge noch genauer an die tatsächlichen Bedingungen der zu reinigenden Flüssigkeit angepasst werden und so eine Über- und/oder Unter-Dosierung des Reinigungsgases noch genauer vermieden werden. Die damit einhergehenden oben genannten Effekte werden dadurch noch stärker bewirkt.

In einem bevorzugten Aspekt umfasst das Einstellen des mindestens einen Verfahrensparameters in Abhängigkeit der erfassten weiteren Eigenschaft der zu reinigenden Flüssigkeit: Auswählen eines von mehreren vorbestimmten Stufenwerten als Ausgangswert für den mindestens einen Verfahrensparameter, vorzugsweise derart, dass bei einer einen höheren Reinigungsbedarf für die Flüssigkeit angebenden erfasste mindestens eine weitere Eigenschaft ein höherer vorbestimmter Stufenwert aus den mehreren vorbestimmten Stufenwerten ausgewählt wird und/oder, dass bei einer einen geringeren Reinigungsbedarf für die Flüssigkeit angebenden erfasste mindestens eine weitere Eigenschaft ein geringerer vorbestimmter Stufenwert aus den mehreren vorbestimmten Stufenwerten ausgewählt wird. Durch Anheben des Verfahrensparameters auf eine bestimmte Stufe eines vorbestimmten Ausgangswertes können besonders wirkungsvoll stärker ausgeprägte Über- und/oder Unter-Dosierungen der des Reinigungsgases in der Flüssigkeit vermieden werden. Die damit einhergehenden oben genannten Vorteile werden dadurch noch stärker bewirkt.

Gemäß eines bevorzugten Aspekts umfasst das Verfahren ferner: in Reaktion auf ein Detektieren einer Änderung des erfassten Volumenstroms der zu reinigenden Flüssigkeit und/oder der weiteren Eigenschaft der zu reinigenden Flüssigkeit, Verändern (z.B. mittels der Steuer und/oder Regelungseinheit) der aktuellen Einstellung des mindestens einen Verfahrensparameters entsprechend der detektierten Änderung, vorzugsweise derart, dass bei einer einen höheren Reinigungsbedarf für die Flüssigkeit angebenden Änderung, die aktuelle Einstellung des mindestens einen Verfahrensparameters derart verändert wird, dass dadurch eine höhere Abgabemenge des Reinigungsgases bewirkt wird und/oder, dass bei einer einen geringeren Reinigungsbedarf für die Flüssigkeit angebenden Änderung, die aktuelle Einstellung des mindestens einen Verfahrensparameters derart verändert wird, dass dadurch eine geringere Abgabemenge des Reinigungsgases bewirkt wird.

Dadurch können Störungen in der Flüssigkeit, wie etwa ein veränderter Volumenstrom oder ein veränderter Grad von Verunreinigungen, wirksam berücksichtigt werden, derart, dass noch genauer Über- und/oder Unter-Dosierungen des Reinigungsgases vermieden werden können. Die damit einhergehenden oben genannten Vorteile werden dadurch noch stärker bewirkt.

Gemäß eines bevorzugten Aspekts der Erfindung kann insbesondere die Steuer- und/oder Regelungseinheit in Reaktion auf einen Empfang eines Steuerungssignal ein Wechseln von dem ersten Betriebsmodus in einen anderen, zweiten Betriebsmodus bewirken, und umgekehrt. Insbesondere kann das Einstellen des mindestens einen Verfahrensparameters in Abhängigkeit des erfassten ersten Volumenstroms zu einem ersten Zeitpunkt in dem ersten Betriebsmodus erfolgt und zu einem anderen, zweiten Zeitpunkt in einem zweiten Betriebsmodus erfolgt und zwar im zweiten Betriebsmodus derart nach einem zweiten in der Steuer- und/oder Regelungseinheit hinterlegten Zusammenhang, der angibt, dass, oberhalb eines vorgegebenen Schwellwertes für den erfassten Volumenstrom, der Wert des eingestellten mindestens einen Verfahrensparameters einem aus mehreren vorbestimmten Stufenwerten ausgewählten vorbestimmten Stufenwert entspricht und mit ansteigendem erfassten Volumenstrom im Wesentlichen konstant bleibt. Dieser zweite Betriebsmodus ist besonders geeignet für ein gesondertes Reinigungsprogramm, beispielsweise, wenn in bestimmten Abständen und abseits der Nutzung der Flüssigkeit durch einen Endverbraucher die Flüssigkeit bzw. ein die Flüssigkeit führendes Leitungssystem intensiver grundgereinigt werden soll. Die Möglichkeit des Wechsels zwischen den Betriebsmodi steigert so die Flexibilität eines besonders effizienten, wirkungsvollen und ressourcenschonenden Betriebes während der Nutzung, bei gleichzeitiger Schaffung eines gesonderten Reinigungsprogramms.

Für das Reinigungsgas kommen grundsätzlich jedes Reinigungsgas in Betracht, das geeignet ist, die betreffende Flüssigkeit von Keimen und/oder Schmutz zu reinigen (insbesondere gasförmige Oxidations- oder Desinfektionsmittel), wie etwa Ozon, Sauerstoff, Chlor, Chlordioxid, Natriumhypochlorit, Calciumhypochlorit und/oder andere Gase basierend auf Chlorid-haltigen Stoffen. Als Flüssigkeit kommen wasserhaltige Flüssigkeiten (Wasser), aber auch andere Flüssigkeiten in Betracht.

Die Aufgabe wird auch gelöst durch eine Vorrichtung gemäß Anspruch 14. Die erfindungsgemäße Vorrichtung ist zum Reinigen von Flüssigkeit, insbesondere wasserhaltige Flüssigkeit, mit einem Reinigungsgas, insbesondere mit ozonhaltigem Gas, wobei die Vorrichtung umfasst: eine Gaszelle, insbesondere eine Elektrolysezelle, zum Erzeugen des Reinigungsgases; ein oder mehrere Sensoren zum Erfassen eines Volumenstroms, und vorzugsweise einer weiteren Eigenschaft, der zu reinigenden Flüssigkeit; eine Steuer- und/oder Regelungseinheit; wobei die Vorrichtung ausgelegt ist, irgendeine Variante des erfindungsgemäßen Verfahrens auszuführen.

Die Aufgabe wird auch gelöst durch ein System gemäß Anspruch 15. Das erfindungsgemäße System umfasst: die erfindungsgemäße Vorrichtung, eine Anwendungsmaschine (101), insbesondere Eismaschine, wobei das System ausgelegt ist, der Anwendungsmaschine die von der Vorrichtung zumindest teilweise gereinigte Flüssigkeit, insbesondere zur Herstellung von Eis, zuführen. Die mit dem Reinigungsgas beaufschlagte Flüssigkeit weist darin gelöstes Reinigungsgas auf, welches in der Anwendungsmaschine ausdampfen kann und so auch diese Maschine reinigen kann. Auch werden alle anderen Leitungen, in denen die gereinigte Flüssigkeit zur Maschine transportiert wird, durch das gelöste Reinigungsgas gereinigt.

Dadurch kann insbesondere verlässlich gereinigtes Wasser zum Herstellen von Eis (z.B. Eiswürfel) verwendet werden.

Sofern diese Kurzbeschreibung der Offenbarung Merkmale beschreibt, die nicht in den Patentansprüchen aufgeführt sind, so stellen diese Merkmale keine wesentlichen Merkmale in dem Sinne dar, dass diese Merkmale zwangsläufig in die Patentansprüche aufzunehmen sind, jedoch sind diese Merkmale besonders prominente bevorzugte Realisierungen der beanspruchten Erfindung, können mit jedem der Patentansprüche kombiniert werden und können auch untereinander beliebig kombiniert werden.

### KURZE BESCHREIBUNG DER ZEICHNUNGEN

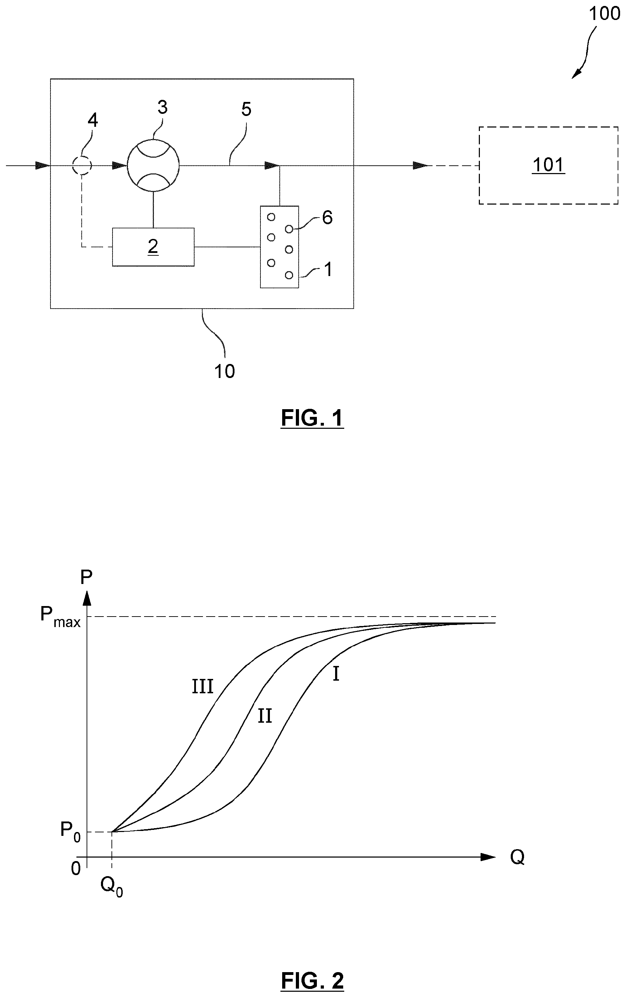

Figur 1 zeigt eine erfindungsgemäße Vorrichtung und ein erfindungsgemäßes System.
Figur 2 zeigt eine graphische Darstellung eines erfindungsgemäßen in der Steuer- und/oder Regelungslogik hinterlegten Zusammenhangs zur Einstellung eines sich auf eine Abgabemenge des Reinigungsgases, auswirkenden Verfahrensparameters, P, in Abhängigkeit des erfassten Volumenstroms, Q, der zu reinigenden Flüssigkeit, gemäß eines ersten Betriebsmodus.

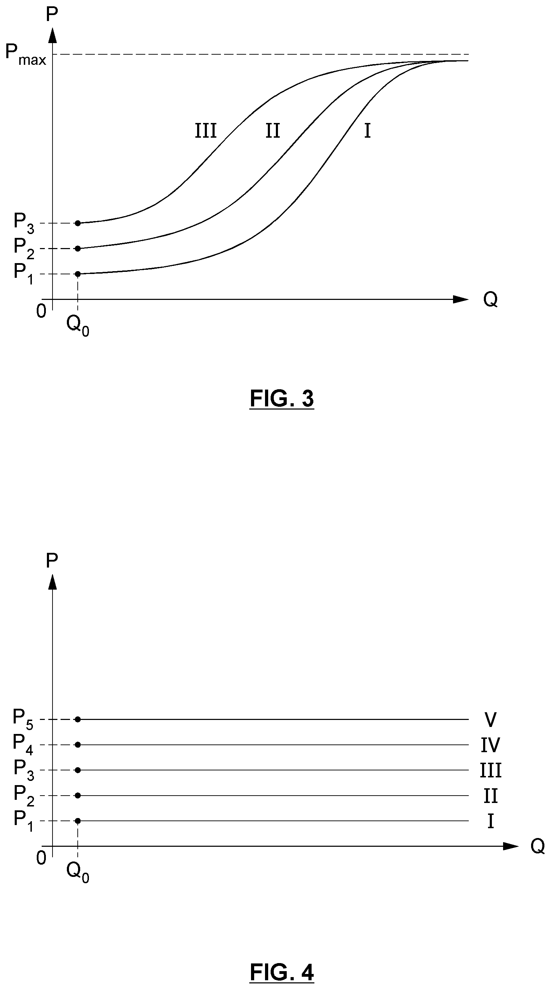

Figur 3 zeigt eine graphische Darstellung eines erfindungsgemäßen in der Steuer- und/oder Regelungslogik hinterlegten Zusammenhangs zur Einstellung eines sich auf eine Abgabemenge des Reinigungsgases, auswirkenden Verfahrensparameters, P, in Abhängigkeit des erfassten Volumenstroms, Q, der zu reinigenden Flüssigkeit, gemäß einer Variante eines ersten Betriebsmodus.
Figur 4 zeigt eine graphische Darstellung eines erfindungsgemäßen in der Steuer- und/oder Regelungslogik hinterlegten Zusammenhangs zur Einstellung eines sich auf eine Abgabemenge des Reinigungsgases, auswirkenden Verfahrensparameters, P, in Abhängigkeit des erfassten Volumenstroms, Q, der zu reinigenden Flüssigkeit, gemäß eines zweiten Betriebsmodus.

Bauteile, die in mehreren Figuren dargestellt sind, tragen dieselben Referenzzeichen.

### DETAILLIERTE BESCHREIBUNG

Figur 1 zeigt eine erfindungsgemäße Vorrichtung 10 und ein erfindungsgemäßes System 100.

Die Vorrichtung 10 ist zum zumindest teilweise Reinigen von Flüssigkeit 5, insbesondere wasserhaltige Flüssigkeit, mit einem Reinigungsgas 6, insbesondere mit ozonhaltigem Gas, geeignet. Die Vorrichtung 10 umfasst eine Gaszelle 1, insbesondere eine Elektrolysezelle, zum Erzeugen des Reinigungsgases 6, insbesondere ozonhaltiges Gas.

Die Vorrichtung 10 umfasst ferner einen ersten Sensor 3 (Volumenstromsensor) zum Erfassen eines Volumenstroms, und vorzugsweise einen optionalen Sensor 4 zur Erfassung einer weiteren Eigenschaft der zu reinigenden Flüssigkeit 5, die vorzugsweise auch einen Reinigungsbedarf der Flüssigkeit 5 angibt. Die weitere Eigenschaft kann eine Konzentration von Erdalkaliionen (z.B. Wasserhärte), einen Verunreinigungsgrad, eine elektrische Leitfähigkeit, eine Temperatur und/oder ein Druck der zu reinigenden Flüssigkeit 5 umfassen.

Die Flüssigkeit 5 gelangt über ein Leitungssystem, welches in Figur 1 mit Pfeilen angedeutet ist, in die Vorrichtung 10 hinein, durch die Vorrichtung 10 hindurch, und aus der Vorrichtung 10 hinaus. Die Gaszelle 1 ist mit diesem Leitungssystem integriert, sodass das in der Gaszelle 1 mit elektrischer Energie erzeugte Reinigungsgas 6 an die in dem Leitungssystem transportierte zu reinigende Flüssigkeit 5 abgegeben und dadurch darin gelöst werden kann.

Die Vorrichtung weist ferner eine Steuer- und/oder Regelungseinheit 2 auf, wobei die Vorrichtung 10 ausgelegt ist, das erfindungsgemäße Verfahren ausführen, welches umfasst: Erfassen eines ersten Volumenstroms der zur reinigenden Flüssigkeit 5 mit dem Sensor 3; Einstellen mindestens eines sich auf eine Abgabemenge des Reinigungsgases 6, auswirkenden Verfahrensparameters in Abhängigkeit des erfassten ersten Volumenstroms, so dass eine erste Abgabemenge des Reinigungsgases 6, an die den erfassten ersten Volumenstrom aufweisende zu reinigende Flüssigkeit 5 abgegeben wird, um die zu reinigende Flüssigkeit 5 zumindest teilweise zu reinigen, wobei das Einstellen des mindestens einen Verfahrensparameters in Abhängigkeit des erfassten ersten Volumenstroms in einem ersten Betriebsmodus nach einem ersten, in der Steuer- und/oder Regelungseinheit 2 hinterlegten Zusammenhang erfolgt, der angibt, dass bei einem größeren erfassten Volumenstrom ein Wert für den mindestens einen Verfahrensparameter eingestellt wird, der einen größeren Wert für die erste Abgabemenge des Reinigungsgases 6 an die zu reinigende Flüssigkeit 5 bewirkt, als bei einem kleineren erfassten Volumenstrom. Der Zusammenhang kann als ausführbare Logik, wie ein Computer-Programm, in der Einheit 2 hinterlegt sein und von dieser zum Zwecke der Ausführung des erfindungsgemäßen Verfahrens ausgeführt werden.

Optional kann die Vorrichtung 10 durch eine Anwendungsmaschine 101, insbesondere durch eine Eismaschine, in einem System 100 ergänzt werden. Das System 100 ist mittels des Leitungssystems ausgelegt, der Maschine 101 die von der Vorrichtung 10 zumindest teilweise gereinigte Flüssigkeit 5 zuzuführen, z.B. zur Herstellung von Eis bei einer Eismaschine 101 und Wasser als Flüssigkeit 5. Bevorzugt kommt dann ozonhaltiges Gas als Reinigungsgas 6 zum Einsatz.

Die mit dem Reinigungsgas 6 beaufschlagte Flüssigkeit 5, hier z.B. das Wasser, weist darin gelöstes Reinigungsgas 6 auf, welches in der Anwendungsmaschine ausdampfen kann und so auch diese Maschine 101 reinigen kann. Auch werden alle anderen Leitungen, in denen die gereinigte Flüssigkeit zur Maschine transportiert wird, durch das gelöste Reinigungsgas gereinigt. Dadurch kann insbesondere verlässlich gereinigtes Wasser zum Herstellen von Eis (z.B. Eiswürfel) verwendet werden.

Figur 2 zeigt eine graphische Darstellung eines erfindungsgemäßen in der Steuer- und/oder Regelungslogik 2 hinterlegten Zusammenhangs zur Einstellung eines sich auf eine Abgabemenge des Reinigungsgases 6, auswirkenden Verfahrensparameters, P, in Abhängigkeit des erfassten Volumenstroms, Q, der zu reinigenden Flüssigkeit 5, gemäß eines ersten Betriebsmodus.

Das Diagramm zeigt, dass das Einstellen des mindestens einen Verfahrensparameters P in Abhängigkeit des erfassten ersten Volumenstroms Q in dem ersten Betriebsmodus nach einem ersten, in der Steuer- und/oder Regelungseinheit 2 hinterlegten Zusammenhang (z.B. eine Logik) erfolgt, der angibt, dass bei einem größeren erfassten Volumenstrom Q ein (hier größerer) Wert für den mindestens einen Verfahrensparameter P eingestellt wird, der einen größeren Wert für die erste Abgabemenge des Reinigungsgases 6 an die zu reinigende Flüssigkeit 5 bewirkt, als bei einem kleineren erfassten Volumenstrom Q.

In diesem Beispiel steigt der eingestellte Verfahrensparameter P mit zunehmenden Volumenstrom Q monoton oder streng monoton an. Es ist jedoch auch möglich, dass die Werte des Verfahrensparameters mit zunehmendem Volumenstrom ein anderes Verhalten zeigen, zum Beispiel (monoton oder streng monoton) abfallen und dennoch eine ansteigende Abgabemenge des Reinigungsgutes mit ansteigendem Volumenstrom bewirkt wird. Jedoch wird der mindestens eine Verfahrensparameter derart eingestellt, dass mit ansteigendem erfassten Volumenstrom Q, die Abgabemenge des Reinigungsgases 6, an die zu reinigende Flüssigkeit 5 monoton oder streng monoton ansteigt.

Der in dem Diagramm der Figur 2 gezeigte Verfahrensparameter P kann beispielsweise die elektrische Leistung sein, mit der die Gaszelle 1, wie etwa die Elektrolysezelle für Ozon und/oder Sauerstoff, betrieben wird, um das Reinigungsgas 6 zu erzeugen. Andere Größen sind für diesen Verfahrensparameter P jedoch auch denkbar, solange sich diese Größen auf eine Abgabemenge des Reinigungsgases 6 in die zu reinigende Flüssigkeit 5 auswirken, also diese Abgabemengen verändern können.

In dem Diagramm sind beispielhaft drei Kurvenverläufe I, II und III dargestellt, die die Berücksichtigung einer weiteren erfassten Eigenschaft des bereinigen Flüssigkeit darstellen. Eine größere Anzahl von Kurvenverläufen ist jedoch möglich.

Das erfindungsgemäße Verfahren umfasst bevorzugt weiterhin: Erfassen mindestens einer weiteren Eigenschaft der zur reinigenden Flüssigkeit 5 mit dem zweiten Sensor 4, wobei das Einstellen des mindestens einen Verfahrensparameters P in Abhängigkeit des erfassten Volumenstroms Q ferner in Abhängigkeit der erfassten weiteren Eigenschaft der zu reinigenden Flüssigkeit 5 erfolgt. Dies geschieht vorzugsweise derart, dass bei einer einen höheren Reinigungsbedarf für die Flüssigkeit 5 angebenden erfassten Eigenschaft (z.B. im Falle der Kurven II bzw. III), der mindestens eine Verfahrensparameter derart eingestellt wird, dass dadurch eine höhere Abgabemenge des Reinigungsgases 6, bewirkt wird und/oder, dass bei einer einen geringeren Reinigungsbedarf für die Flüssigkeit 5 angebenden erfassten Eigenschaft (z.B. im Falle der Kurve I), der mindestens eine Verfahrensparameter derart eingestellt wird, dass dadurch eine geringere Abgabemenge des Reinigungsgases 6, bewirkt wird.

Die weitere Eigenschaft kann eine Konzentration von Erdalkaliionen (z.B. Wasserhärte), einen Verunreinigungsgrad, eine elektrische Leitfähigkeit, eine Temperatur und/oder ein Druck der zu reinigenden Flüssigkeit 5 umfassen. Diese Eigenschaften geben zusätzlich Aufschluss über den Reinigungsbedarf für die Flüssigkeit. Durch Berücksichtigung dieser weiteren Eigenschaft nun kann der Verfahren zwar mit der P und damit auch die Abgabemenge des Reinigungsgases 6 noch genauer an die Umstände der zu reinigenden Flüssigkeit 5 angepasst werden und somit noch genauer eine Über- und/oder Unter-Dosierung des Reinigungsgas 6 in der Flüssigkeit 5 verhindert werden.

Beispielsweise kann die Kurve III statt der Kurve I gewählt werden, um höhere Wasserhärte bzw. erdalkalische Verunreinigungen oder höhere mikrobakteriologische Kontamination entgegenzuwirken.

Anlagebedingt (z.B. bedingt durch die Gaszelle 1) kann der einzustellende Verfahrensparameter P ein Maximalwert Pₘₐₓ als obere Schranke aufweisen. Pₘₐₓ kann eine maximale Leistungsfähigkeit der Gaszelle entsprechen, und kann insbesondere eine maximale elektrische Leistung der Gaszelle sein.

Der in der Einheit 2 hinterlegte Zusammenhang kann auch festlegen, dass erst bei Überschreitung einer unteren Schranke Qₒ (Schwellwert) für den Volumenstrom Q ein bestimmter Ausgangswert Pₒ für den Verfahrensparameter P durch die Einheit 2 eingestellt wird und unterhalb der Schranke Qₒ die Gaszelle 1 inaktiv ist und daher kein Reinigungsgas 6 an die Flüssigkeit 5 abgegeben wird und die Flüssigkeit folglich nicht gereinigt wird. Der Wert Qₒ kann der unterste Volumenstrom sein, bei den der Sensor 3 anspringt. Pₒ kann derjenige Wert sein, der für Qₒ eine verlässliche Reinigung bewirkt (z.B. weniger oder gleich 100 KBE/ml in der Flüssigkeit bewirkt). Qₒ kann 10 bis 5000 ml/min, bevorzugt 10 bis 250 ml/min oder 200 bis 5000 ml/min sein, z.B. in Abhängigkeit des Werteberreiches des verwendeten Sensors 3.

Figur 3 zeigt eine graphische Darstellung eines erfindungsgemäßen in der Steuer- und/oder Regelungslogik 2 hinterlegten Zusammenhangs zur Einstellung eines sich auf eine Abgabemenge des Reinigungsgases 6, auswirkenden Verfahrensparameters, P, in Abhängigkeit des erfassten Volumenstroms, Q, der zu reinigenden Flüssigkeit 5, gemäß einer Variante des ersten Betriebsmodus.

Das Diagramm in Figur 3 zeigt, dass der Ausgangswert des Verfahrensparameters P bei dem Schwellwert Qₒ auch verschieden eingestellt werden kann. Das Einstellen des mindestens einen Verfahrensparameters P in Abhängigkeit der erfassten weiteren Eigenschaft der zu reinigenden Flüssigkeit 5 umfasst hierbei: Auswählen eines von mehreren vorbestimmten Stufenwerten P1, P2, oder P3 als Ausgangswert für den mindestens einen Verfahrensparameter P bei dem Schwellwert Qₒ, vorzugsweise derart, dass bei einer einen höheren Reinigungsbedarf für die Flüssigkeit 5 angebenden erfasste mindestens eine weitere Eigenschaft ein höherer vorbestimmter Stufenwert aus den mehreren vorbestimmten Stufenwerten P1, P2, P3 als Ausgangswert von P bei dem Schwellwert Qₒ ausgewählt wird und/oder, dass bei einer einen geringeren Reinigungsbedarf für die Flüssigkeit 5 angebenden erfasste mindestens eine weitere Eigenschaft ein geringerer vorbestimmter Stufenwert aus den mehreren vorbestimmten Stufenwerten P1, P2, P3 als Ausgangswert von P bei dem Schwellwert Qₒ ausgewählt wird.

Auch wenn der Kurvenverlauf des Verfahrensparameters P mit ansteigenden Volumenstrom Q oberhalb des Schwellwertes Qₒ beliebig - und damit auch ansteigend - verlaufen kann, wird durch Anheben des Ausgangswertes des Verfahrensparameters P auf einen bestimmten vorgegebenen Stufenwert P1, P2, oder P3 bei Qₒ ein gewisses Level für den Verfahrensparameter, damit auch für die Abgabemenge des Reinigungsgases, geschaffen. Dadurch können besonders wirkungsvoll stärker ausgeprägte Über- und/oder Unter-Dosierungen der des Reinigungsgases 6 in der Flüssigkeit 5 vermieden werden.

Erst kann anhand des Zusammenhangs von Figur 3 ein Stufenwert als Offset zur Grundlast der Gaszelle eingestellt werden, z.B. um Wasserhärte bzw. erdalkalische Verunreinigungen, mikrobakteriologische Kontamination, lokale Druckschwankungen, Sanierung eines Verbrauchergerätes, und/oder Temperaturschwankungen im Wasser zu kompensieren, um danach nach dem Zusammenhang von Figur 2 und ggf. weiteren Messwerten die maximal erzeugte Menge von Reinigungsgas zu definieren.

Die Anzahl der Stufenwerte bzw. Kurven ist hier nur beispielhaft und kann auch weniger oder mehr umfassen als in Figur 3 gezeigt, z.B. auch noch Stufenwerte P4 bis P20 und entsprechende weitere Kurven.

Das erfindungsgemäße Verfahrung unter Einsatz der in Fig. 2 und ggf. Fig. 3 dargestellten Zusammenhänge zwischen P und Q kann ferner umfassen: in Reaktion auf ein Detektieren einer Änderung des erfassten Volumenstroms Q der zu reinigenden Flüssigkeit 5 und/oder der weiteren Eigenschaft der zu reinigenden Flüssigkeit 5, Verändern der aktuellen Einstellung des mindestens einen Verfahrensparameters P entsprechend der detektierten Änderung, vorzugsweise derart, dass bei einer einen höheren Reinigungsbedarf für die Flüssigkeit 5 angebenden Änderung (von P oder der weiteren Eigenschaft), die aktuelle Einstellung des mindestens einen Verfahrensparameters P derart in der Einheit 2 verändert wird, dass dadurch eine höhere Abgabemenge des Reinigungsgases 6, bewirkt wird und/oder, dass bei einer einen geringeren Reinigungsbedarf für die Flüssigkeit 5 angebenden Änderung, die aktuelle Einstellung des mindestens einen Verfahrensparameters P derart verändert wird, dass dadurch eine geringere Abgabemenge des Reinigungsgases 6, bewirkt wird. Die Einheit 2 wirkt das insbesondere als Regelungseinheit und kann Störungen in Volumenstrom Q und/oder weiterer Eigenschaft bei der Abgabemenge des Reinigungsgases 6 berücksichtigen und so noch verlässlicher und ressourcenschonend reinigen.

Figur 4 zeigt eine graphische Darstellung eines erfindungsgemäßen in der Steuer- und/oder Regelungslogik 2 hinterlegten Zusammenhangs zur Einstellung eines sich auf eine Abgabemenge des Reinigungsgases 6, auswirkenden Verfahrensparameters, P, in Abhängigkeit des erfassten Volumenstroms, Q, der zu reinigenden Flüssigkeit 5, gemäß eines zweiten Betriebsmodus.

Das Diagramm in Figur 4 zeigt, dass das Einstellen des mindestens einen Verfahrensparameters P in Abhängigkeit des erfassten Volumenstroms Q in einem zweiten Betriebsmodus erfolgen kann und zwar im zweiten Betriebsmodus nach einem in der Steuer- und/oder Regelungseinheit hinterlegten zweiten Zusammenhang (z.B. eine Logik), der angibt, dass, oberhalb des vorgegebenen Schwellwertes Qₒ für den erfassten Volumenstrom, der Wert des eingestellten mindestens einen Verfahrensparameters einem aus mehreren vorbestimmten Stufenwerten P1, P2, P3, P4, P5 (unterhalb von Pₘₐₓ) ausgewählten vorbestimmten Stufenwert entspricht und mit ansteigendem erfassten Volumenstrom Q (im Wesentlichen) konstant bleibt.

Jede der Stufen P1 bis P5 kann einem Wert I bis V der weiteren Eigenschaft entsprechen, die mittels Sensor 4 von der Einheit 2 bestimmt wird.

Der zweite, in Figur 4 dargestellte Betriebsmodus kann zu einem anderen Zeitpunkt als der erste Betriebsmodus eingesetzt werden. Zwischen den Betriebsmodi kann gewechselt werden.

Beispielsweise kann der zweite Betriebsmodus für ein gesondertes Reinigungsprogramm der Anlage, insbesondere des Leitungssystems der Flüssigkeit, herangezogen werden, um eine Grundreinigung durchzuführen, während der erste Betriebsmodus für die reguläre Nutzung der Flüssigkeit verwendet wird (z.B. für die Maschine 101).

Beispielsweise kann ein aktueller Verunreinigungsgrad der Flüssigkeit mit dem Sensor 4 detektiert werden und abhängig von dem Grad der Verunreinigung eine der Stufenwerte P1 bis P4 eingestellt werden. Beispielsweise kann ein höherer Stufenwert bei einem höheren Verunreinigungsgrad eingestellt werden, um eine höhere Abgabemenge des Reinigungsgases zu bewirken, und dadurch ein intensiveres Reinigungsprogramm durchzuführen. Bei einem geringeren Verunreinigungsgrad kann ein geringerer Stufenwert eingestellt werden, um ein weniger intensives Reinigungsprogramm durchzuführen und dadurch die Gaszelle, Ressourcen und Umwelt zu schonen.

Der Verfahrensparameter P ist im zweiten Betriebsmodus unabhängig von dem Volumenstrom gesteuert und fix, und kann unter anderem durch die übergeordnete Kontrolleinheit vorgegeben werden, z.B. um eine Sanierung der Anlage durchzuführen.

Auch wenn in Figur 4 beispielhaft fünf Stufenwerte P1 bis P5 gezeigt sind, so sind auch weniger oder mehr Stufenwerte möglich.

Die Stufenwerte P1 bis Pn können im Wertebereich 5 bis 900 mW, bevorzugt 50 bis 500 mW für P als elektrische Leistung der Gaszelle liegen.

Wenn das Reinigungsprogramm im zweitem Betriebsmodus abgeschlossen, kann ein Steuerungssignal von einer in Fig. 1 nicht gezeigten übergeordneten Kontrolleinheit (intern oder extern zu der Vorrichtung 10 und/oder zu dem System 100) an der Einheit 2 empfangen werden, um in den ersten Betriebsmodus zu wechseln. Beispielsweise kann dann eine Zuleitung für die Flüssigkeit geöffnet werden, um diese für eine Anwendung, beispielsweise eine Eismaschine mit Wasser als Flüssigkeit, zu verwenden und diese Flüssigkeit aus der Zuleitung kann dann im ersten Betriebsmodus gereinigt werden.

Die Einheit 2 ist ausgelegt, in Reaktion auf das Steuerungssignal zwischen den in Figuren 2 bzw. 3 und Fig. 4 dargestellten Betriebsmodi zu wechseln und so ein hohes Maß an Flexibilität bei gleichzeitig hoher Betriebssicherheit und Schonung von Anlagen, Mensch und Umwelt zu erreichen.

In der Beschreibung und in den Figuren sind bevorzugte Aspekte und Ausführungsformen der durch die folgenden Ansprüche beanspruchten Gegenstände beschrieben. Die verschiedenen oben beschriebenen Aspekte und Ausführungsformen können kombiniert werden, um noch weitere Ausführungsformen zu schaffen. Diese und andere Änderungen können an den Ausführungsformen im Lichte der obigen detaillierten Beschreibung vorgenommen werden. Im Allgemeinen sollten die in den folgenden Ansprüchen verwendeten Begriffe nicht so ausgelegt werden, dass sie die Ansprüche auf die in der Beschreibung und den Ansprüchen offengelegten spezifischen Aspekte und Ausführungsformen beschränken, sondern so, dass sie alle möglichen Ausführungsformen zusammen mit dem vollen Umfang der Äquivalente, auf die diese Ansprüche Anspruch haben, umfassen.

### BEZUGSZEICHENLISTE

Gaszelle 1
Steuer- und/oder Regelungseinheit 2
erster Sensor (Volumenstromsensor) 3
zweiten Sensor 4
Flüssigkeit 5
Reinigungsgas 6
Vorrichtung 10
System 100
Anwendungsmaschine (Eismaschine) 101

## Patentansprüche

1. Verfahren zur zumindest teilweisen Reinigung einer Flüssigkeit (5), insbesondere einer wasserhaltigen Flüssigkeit (5), mit Reinigungsgas (6), insbesondere mit ozonhaltigem Gas, das Verfahren umfassend:
Erfassen eines ersten Volumenstroms der zur reinigenden Flüssigkeit (5) mit einem ersten Sensor (3);
Einstellen mindestens eines sich auf eine Abgabemenge des Reinigungsgases (6), auswirkenden Verfahrensparameters in Abhängigkeit des erfassten ersten Volumenstroms, so dass eine erste Abgabemenge des Reinigungsgases (6), an die den erfassten ersten Volumenstrom aufweisende zu reinigende Flüssigkeit (5) abgegeben wird, um die zu reinigende Flüssigkeit (5) zumindest teilweise zu reinigen, wobei das Einstellen des mindestens einen Verfahrensparameters in Abhängigkeit des erfassten ersten Volumenstroms in einem ersten Betriebsmodus nach einem ersten, in einer Steuer- und/oder Regelungseinheit (2) hinterlegten Zusammenhang erfolgt, der angibt, dass bei einem größeren erfassten Volumenstrom ein Wert für den mindestens einen Verfahrensparameter eingestellt wird, der einen größeren Wert für die erste Abgabemenge des Reinigungsgases (6) an die zu reinigende Flüssigkeit (5) bewirkt, als bei einem kleineren erfassten Volumenstrom.

2. Verfahren nach Anspruch 1, wobei der erste vorbestimmte Zusammenhang angibt, dass der mindestens eine Verfahrensparameter derart eingestellt wird, dass mit ansteigendem erfassten Volumenstrom, die Abgabemenge des Reinigungsgases (6), an die zu reinigende Flüssigkeit (5) monoton oder streng monoton ansteigt.

3. Verfahren nach Anspruch 1 oder 2, ferner umfassend:
Erfassen mindestens einer weiteren Eigenschaft der zur reinigenden Flüssigkeit (5) mit einem zweiten Sensor (4);
wobei das Einstellen des mindestens einen Verfahrensparameters in Abhängigkeit des erfassten Volumenstroms ferner in Abhängigkeit der erfassten weiteren Eigenschaft der zu reinigenden Flüssigkeit (5) erfolgt, vorzugsweise derart, dass bei einer einen höheren Reinigungsbedarf für die Flüssigkeit (5) angebenden erfassten Eigenschaft, der mindestens eine Verfahrensparameter derart eingestellt wird, dass dadurch eine höhere Abgabemenge des Reinigungsgases (6), bewirkt wird und/oder, dass bei einer einen geringeren Reinigungsbedarf für die Flüssigkeit (5) angebenden erfassten Eigenschaft, der mindestens eine Verfahrensparameter derart eingestellt wird, dass dadurch eine geringere Abgabemenge des Reinigungsgases (6), bewirkt wird.

4. Verfahren nach Anspruch 3, wobei das Einstellen des mindestens einen Verfahrensparameters in Abhängigkeit der erfassten weiteren Eigenschaft der zu reinigenden Flüssigkeit (5) umfasst:
Auswählen eines von mehreren vorbestimmten Stufenwerten (P1 - Pn) als Ausgangswert für den mindestens einen Verfahrensparameter, vorzugsweise derart, dass bei einer einen höheren Reinigungsbedarf für die Flüssigkeit (5) angebenden erfasste mindestens eine weitere Eigenschaft ein höherer vorbestimmter Stufenwert aus den mehreren vorbestimmten Stufenwerten (P1 - Pn) ausgewählt wird und/oder, dass bei einer einen geringeren Reinigungsbedarf für die Flüssigkeit (5) angebenden erfasste mindestens eine weitere Eigenschaft ein geringerer vorbestimmter Stufenwert aus den mehreren vorbestimmten Stufenwerten (P1 - Pn) ausgewählt wird.

5. Das Verfahren nach Anspruch 3 oder 4, ferner umfassend:
in Reaktion auf ein Detektieren einer Änderung des erfassten Volumenstroms der zu reinigenden Flüssigkeit (5) und/oder der weiteren Eigenschaft der zu reinigenden Flüssigkeit (5), Verändern der aktuellen Einstellung des mindestens einen Verfahrensparameters entsprechend der detektierten Änderung, vorzugsweise derart, dass bei einer einen höheren Reinigungsbedarf für die Flüssigkeit (5) angebenden Änderung, die aktuelle Einstellung des mindestens einen Verfahrensparameters derart verändert wird, dass dadurch eine höhere Abgabemenge des Reinigungsgases (6), bewirkt wird und/oder, dass bei einer einen geringeren Reinigungsbedarf für die Flüssigkeit (5) angebenden Änderung, die aktuelle Einstellung des mindestens einen Verfahrensparameters derart verändert wird, dass dadurch eine geringere Abgabemenge des Reinigungsgases (6), bewirkt wird.

6. Verfahren nach einem der vorangehen Ansprüche 3 bis 5, wobei die weitere Eigenschaft eine Konzentration von Erdalkaliionen, einen Verunreinigungsgrad, eine elektrische Leitfähigkeit, eine Temperatur und/oder ein Druck der zu reinigenden Flüssigkeit (5) umfasst.

7. Verfahren nach irgendeinem der vorangehen Ansprüche, wobei das Einstellen des mindestens einen Verfahrensparameters in Abhängigkeit des erfassten ersten Volumenstroms zu einem ersten Zeitpunkt in dem ersten Betriebsmodus erfolgt und zu einem anderen, zweiten Zeitpunkt in einem zweiten Betriebsmodus erfolgt und zwar im zweiten Betriebsmodus nach einem in der Steuer- und/oder Regelungseinheit hinterlegten zweiten Zusammenhang, der angibt, dass, oberhalb eines vorgegebenen Schwellwertes (Qₒ) für den erfassten Volumenstrom, der Wert des eingestellten mindestens einen Verfahrensparameters einem aus mehreren vorbestimmten Stufenwerten (P1 - P5) ausgewählten vorbestimmten Stufenwert entspricht und mit ansteigendem erfassten Volumenstrom im Wesentlichen konstant bleibt.

8. Das Verfahren nach Anspruch 7, ferner umfassend:
in Reaktion auf ein Empfangen eines Steuerungssignals, Wechseln zwischen dem ersten Betriebsmodus und dem zweiten Betriebsmodus.

9. Verfahren nach irgendeinem der vorangehen Ansprüche, umfassend:
Erfassen eines zweiten Volumenstroms der zur reinigenden Flüssigkeit (5), wobei der erfasste zweite Volumenstrom größer ist als der erfasste erste Volumenstrom; und
Einstellen des mindestens einen Verfahrensparameters in Abhängigkeit des erfassten zweiten Volumenstroms derart, dass eine zweite Abgabemenge des Reinigungsgases (6), an die zu reinigende Flüssigkeit (5) abgegeben wird, um die zu reinigende Flüssigkeit (5) zumindest teilweise zu reinigen, wobei die zweite Abgabemenge des Reinigungsgases (6), größer ist als oder gleich groß ist wie die erste Abgabemenge des Reinigungsgases (6), wobei das Einstellen des mindestens einen Verfahrensparameters in Abhängigkeit des erfassten zweiten Volumenstroms in dem ersten oder zweiten Betriebsmodus erfolgt.

10. Verfahren nach Anspruch 9, wobei das Erfassen des ersten Volumenstroms und des zweiten Volumenstroms Teil einer zeitaufgelösten Erfassung des Volumenstroms der zu reinigenden Flüssigkeit (5) ist, in der der erste Volumenstrom zu einer ersten Zeit erfasst wird und der zweite Volumenstrom zu einer dritten Zeit erfasst wird, die von der ersten Zeit abweicht.

11. Verfahren nach Anspruch 10, wobei die zeitaufgelöste Erfassung des Volumenstroms der zu reinigenden Flüssigkeit (5) eine, vorzugsweise monoton steigende oder fallende, zeitliche Variation des Verfahrensparameters, und damit auch der Abgabemenge des Reinigungsgases (6), in Abhängigkeit des während der zeitaufgelösten Erfassung erfassten Volumenstroms der zur reinigenden Flüssigkeit (5) umfasst.

12. Verfahren nach irgendeinem der vorangehenden Ansprüche, wobei der mindestens eine Verfahrensparameter eine elektrische Größe, insbesondere eine elektrische Leistung, umfasst mit der eine Gaszelle (1), insbesondere eine Elektrolysezelle, zur Erzeugung des Reinigungsgases (6), betrieben wird.

13. Verfahren nach irgendeinem der vorangehenden Ansprüche, wobei das Reinigungsgas (6) Ozon, Sauerstoff, Chlor und/oder andere gasförmige Oxidations- oder Desinfektionsmittel umfasst.

14. Eine Vorrichtung (10) zum Reinigen von Flüssigkeit (5), insbesondere wasserhaltige Flüssigkeit (5), mit einem Reinigungsgas (6), insbesondere mit ozonhaltigem Gas, die Vorrichtung (10) umfassend:
eine Gaszelle (1), insbesondere eine Elektrolysezelle, zum Erzeugen des Reinigungsgases (6);
ein oder mehrere Sensoren (3, 4) zum Erfassen eines Volumenstroms, und vorzugsweise einer weiteren Eigenschaft, der zu reinigenden Flüssigkeit (5);
eine Steuer- und/oder Regelungseinheit (2);
wobei die Vorrichtung (10) ausgelegt ist, das Verfahren nach einem der vorangehen Ansprüche ausführen.

15. Ein System (100), umfassend:
die Vorrichtung (10) nach Anspruch 14;
eine Anwendungsmaschine (101), insbesondere Eismaschine, wobei das System (100) ausgelegt ist, der Anwendungsmaschine (101) die von der Vorrichtung (10) zumindest teilweise gereinigte Flüssigkeit (5), insbesondere zur Herstellung von Eis, zuführen.

## Geänderte Patentansprüche

### Geänderte Patentansprüche gemäss Regel 137(2) EPÜ.

1. Verfahren zur zumindest teilweisen Reinigung einer Flüssigkeit (5), insbesondere einer wasserhaltigen Flüssigkeit (5), mit Reinigungsgas (6), insbesondere mit ozonhaltigem Gas, das Verfahren umfassend:
Erfassen eines ersten Volumenstroms der zur reinigenden Flüssigkeit (5) mit einem ersten Sensor (3);
Einstellen mindestens eines sich auf eine Abgabemenge des Reinigungsgases (6) auswirkenden Verfahrensparameters in Abhängigkeit des erfassten ersten Volumenstroms, so dass eine erste Abgabemenge des Reinigungsgases (6) an die den erfassten ersten Volumenstrom aufweisende zu reinigende Flüssigkeit (5) abgegeben wird, um die zu reinigende Flüssigkeit (5) zumindest teilweise zu reinigen, wobei das Einstellen des mindestens einen Verfahrensparameters in Abhängigkeit des erfassten ersten Volumenstroms in einem ersten Betriebsmodus nach einem ersten, in einer Steuer- und/oder Regelungseinheit (2) hinterlegten Zusammenhang erfolgt, der angibt, dass bei einem größeren erfassten Volumenstrom ein Wert für den mindestens einen Verfahrensparameter eingestellt wird, der einen größeren Wert für die erste Abgabemenge des Reinigungsgases (6) an die zu reinigende Flüssigkeit (5) bewirkt, als bei einem kleineren erfassten Volumenstrom;
**gekennzeichnet durch**
Erfassen mindestens einer weiteren Eigenschaft der zur reinigenden Flüssigkeit (5) mit einem zweiten Sensor (4);
wobei das Einstellen des mindestens einen Verfahrensparameters in Abhängigkeit des erfassten Volumenstroms ferner in Abhängigkeit der erfassten weiteren Eigenschaft der zu reinigenden Flüssigkeit (5) erfolgt, derart, dass bei einer einen höheren Reinigungsbedarf für die Flüssigkeit (5) angebenden erfassten Eigenschaft, der mindestens eine Verfahrensparameter derart eingestellt wird, dass dadurch eine höhere Abgabemenge des Reinigungsgases (6) bewirkt wird und, dass bei einer einen geringeren Reinigungsbedarf für die Flüssigkeit (5) angebenden erfassten Eigenschaft, der mindestens eine Verfahrensparameter derart eingestellt wird, dass dadurch eine geringere Abgabemenge des Reinigungsgases (6) bewirkt wird.

2. Verfahren nach Anspruch 1, wobei der erste vorbestimmte Zusammenhang angibt, dass der mindestens eine Verfahrensparameter derart eingestellt wird, dass mit ansteigendem erfassten Volumenstrom, die Abgabemenge des Reinigungsgases (6), an die zu reinigende Flüssigkeit (5) monoton oder streng monoton ansteigt.

3. Verfahren nach Anspruch 1 oder 2, wobei das Einstellen des mindestens einen Verfahrensparameters in Abhängigkeit der erfassten weiteren Eigenschaft der zu reinigenden Flüssigkeit (5) umfasst:
Auswählen eines von mehreren vorbestimmten Stufenwerten (P1 - Pn) als Ausgangswert für den mindestens einen Verfahrensparameter, vorzugsweise derart, dass bei einer einen höheren Reinigungsbedarf für die Flüssigkeit (5) angebenden erfasste mindestens eine weitere Eigenschaft ein höherer vorbestimmter Stufenwert aus den mehreren vorbestimmten Stufenwerten (P1 - Pn) ausgewählt wird und/oder, dass bei einer einen geringeren Reinigungsbedarf für die Flüssigkeit (5) angebenden erfasste mindestens eine weitere Eigenschaft ein geringerer vorbestimmter Stufenwert aus den mehreren vorbestimmten Stufenwerten (P1 - Pn) ausgewählt wird.

4. Das Verfahren nach irgendeinem der Ansprüche 1 bis 3, ferner umfassend: in Reaktion auf ein Detektieren einer Änderung des erfassten Volumenstroms der zu reinigenden Flüssigkeit (5) und/oder der weiteren Eigenschaft der zu reinigenden Flüssigkeit (5), Verändern der aktuellen Einstellung des mindestens einen Verfahrensparameters entsprechend der detektierten Änderung, vorzugsweise derart, dass bei einer einen höheren Reinigungsbedarf für die Flüssigkeit (5) angebenden Änderung, die aktuelle Einstellung des mindestens einen Verfahrensparameters derart verändert wird, dass dadurch eine höhere Abgabemenge des Reinigungsgases (6), bewirkt wird und/oder, dass bei einer einen geringeren Reinigungsbedarf für die Flüssigkeit (5) angebenden Änderung, die aktuelle Einstellung des mindestens einen Verfahrensparameters derart verändert wird, dass dadurch eine geringere Abgabemenge des Reinigungsgases (6), bewirkt wird.

5. Verfahren nach einem der vorangehen Ansprüche 1 bis 4, wobei die weitere Eigenschaft eine Konzentration von Erdalkaliionen, einen Verunreinigungsgrad, eine elektrische Leitfähigkeit, eine Temperatur und/oder ein Druck der zu reinigenden Flüssigkeit (5) umfasst.

6. Verfahren nach irgendeinem der vorangehen Ansprüche, wobei das Einstellen des mindestens einen Verfahrensparameters in Abhängigkeit des erfassten ersten Volumenstroms zu einem ersten Zeitpunkt in dem ersten Betriebsmodus erfolgt und zu einem anderen, zweiten Zeitpunkt in einem zweiten Betriebsmodus erfolgt und zwar im zweiten Betriebsmodus nach einem in der Steuer- und/oder Regelungseinheit hinterlegten zweiten Zusammenhang, der angibt, dass, oberhalb eines vorgegebenen Schwellwertes (Qₒ) für den erfassten Volumenstrom, der Wert des eingestellten mindestens einen Verfahrensparameters einem aus mehreren vorbestimmten Stufenwerten (P1 - P₅) ausgewählten vorbestimmten Stufenwert entspricht und mit ansteigendem erfassten Volumenstrom im Wesentlichen konstant bleibt.

7. Das Verfahren nach Anspruch 6, ferner umfassend:
in Reaktion auf ein Empfangen eines Steuerungssignals, Wechseln zwischen dem ersten Betriebsmodus und dem zweiten Betriebsmodus.

8. Verfahren nach irgendeinem der vorangehen Ansprüche, umfassend:
Erfassen eines zweiten Volumenstroms der zur reinigenden Flüssigkeit (5), wobei der erfasste zweite Volumenstrom größer ist als der erfasste erste Volumenstrom; und Einstellen des mindestens einen Verfahrensparameters in Abhängigkeit des erfassten zweiten Volumenstroms derart, dass eine zweite Abgabemenge des Reinigungsgases (6), an die zu reinigende Flüssigkeit (5) abgegeben wird, um die zu reinigende Flüssigkeit (5) zumindest teilweise zu reinigen, wobei die zweite Abgabemenge des Reinigungsgases (6), größer ist als oder gleich groß ist wie die erste Abgabemenge des Reinigungsgases (6), wobei das Einstellen des mindestens einen Verfahrensparameters in Abhängigkeit des erfassten zweiten Volumenstroms in dem ersten oder zweiten Betriebsmodus erfolgt.

9. Verfahren nach Anspruch 8, wobei das Erfassen des ersten Volumenstroms und des zweiten Volumenstroms Teil einer zeitaufgelösten Erfassung des Volumenstroms der zu reinigenden Flüssigkeit (5) ist, in der der erste Volumenstrom zu einer ersten Zeit erfasst wird und der zweite Volumenstrom zu einer zweiten Zeit erfasst wird, die von der ersten Zeit abweicht.

10. Verfahren nach Anspruch 9, wobei die zeitaufgelöste Erfassung des Volumenstroms der zu reinigenden Flüssigkeit (5) eine, vorzugsweise monoton steigende oder fallende, zeitliche Variation des Verfahrensparameters, und damit auch der Abgabemenge des Reinigungsgases (6), in Abhängigkeit des während der zeitaufgelösten Erfassung erfassten Volumenstroms der zur reinigenden Flüssigkeit (5) umfasst.

11. Verfahren nach irgendeinem der vorangehenden Ansprüche, wobei der mindestens eine Verfahrensparameter eine elektrische Größe, insbesondere eine elektrische Leistung, umfasst mit der eine Gaszelle (1), insbesondere eine Elektrolysezelle, zur Erzeugung des Reinigungsgases (6), betrieben wird.

12. Verfahren nach irgendeinem der vorangehenden Ansprüche, wobei das Reinigungsgas (6) Ozon, Sauerstoff, Chlor und/oder andere gasförmige Oxidations- oder Desinfektionsmittel umfasst.

13. Eine Vorrichtung (10) zum Reinigen von Flüssigkeit (5), insbesondere wasserhaltige Flüssigkeit (5), mit einem Reinigungsgas (6), insbesondere mit ozonhaltigem Gas, die Vorrichtung (10) umfassend:
eine Gaszelle (1), insbesondere eine Elektrolysezelle, zum Erzeugen des Reinigungsgases (6);
ein oder mehrere Sensoren (3, 4) zum Erfassen eines Volumenstroms, und vorzugsweise einer weiteren Eigenschaft, der zu reinigenden Flüssigkeit (5);
eine Steuer- und/oder Regelungseinheit (2), wobei die Steuer- und/oder Regelungseinheit (2) ausgelegt ist zum Einstellen mindestens eines sich auf eine Abgabemenge des Reinigungsgases (6) auswirkenden Verfahrensparameters in Abhängigkeit des erfassten Volumenstroms und zum Bewirken, dass durch die Gaszelle (1) eine erste Abgabemenge des Reinigungsgases (6) an die den erfassten Volumenstrom aufweisende zu reinigende Flüssigkeit (5) abgegeben wird, um die zu reinigende Flüssigkeit (5) zumindest teilweise zu reinigen, und wobei die Steuer- und/oder Regelungseinheit (2) ausgelegt ist, das Einstellen des mindestens einen Verfahrensparameters in Abhängigkeit des erfassten Volumenstroms in einem ersten Betriebsmodus nach einem ersten, in der Steuer- und/oder Regelungseinheit (2) hinterlegten Zusammenhang durchzuführen, der angibt, dass bei einem größeren erfassten Volumenstrom ein Wert für den mindestens einen Verfahrensparameter eingestellt wird, der einen größeren Wert für die erste Abgabemenge des Reinigungsgases (6) an die zu reinigende Flüssigkeit (5) bewirkt, als bei einem kleineren erfassten Volumenstrom.

14. Ein System (100), umfassend:
die Vorrichtung (10) nach Anspruch 13;
eine Anwendungsmaschine (101), insbesondere Eismaschine, wobei das System (100) ausgelegt ist, der Anwendungsmaschine (101) die von der Vorrichtung (10) zumindest teilweise gereinigte Flüssigkeit (5), insbesondere zur Herstellung von Eis, zuführen.
